# EUROPEAN PATENT APPLICATION

(11) **EP 4 637 100 A1**
(43) Date of publication of application: **22.10.2025**
(21) Application number: 23905530.4
(22) Date of filing: 06.11.2023
(51) Int. Cl.: H04L 41/0896

(54) **METHOD FOR ADJUSTING BANDWIDTH OF FINE GRANULARITY SERVICE**

(30) Priority: 21.12.2022 CN 202211648612
(71) Applicant: ZTE CORPORATION, Shenzhen, Guangdong 518057 (CN)
(72) Inventor: PU, Xiansen, Shenzhen, Guangdong 518057 (CN)
(74) Representative: Ziebig Hengelhaupt Intellectual Property Attorneys Patentanwaltskanzlei PartGmbB
(86) International application number: PCT/CN2023/129887
(87) International publication number: WO 2024/131360

(57) **Abstract**

The present application discloses a method for adjusting the bandwidth of a fine granularity service. The solution provided in the present application is applied to a processing node of a communication link for bearing a fine granularity service, and comprises: in response to a fine granularity service bandwidth adjustment instruction, extending an OAM packet receiving period of a present node to a preset packet receiving period, the preset packet receiving period being not smaller than a target period, wherein the target period is a packet receiving period matching the fine granularity service bandwidth adjustment instruction; performing bandwidth adjustment on a fine granularity service according to the fine granularity service bandwidth adjustment instruction, and triggering an adjacent processing node to execute the fine granularity service bandwidth adjustment instruction; and when a bandwidth adjustment complete message is received, adjusting the OAM packet receiving period of the present node to the target period after a preset time.

## Description

### CROSS-REFERENCE TO RELATED APPLICATIONS

The present application claims priority to the Chinese patent application No. 202211648612.2 filed on December 21, 2022 to the China Patent Office, and entitled "METHOD FOR ADJUSTING BANDWIDTH OF FINE GRANULARITY SERVICE", of which the entire contents are incorporated herein by reference.

### TECHNICAL FIELD

The present application relates to the field of communications, in particular to a method for adjusting a bandwidth of a fine granularity service.

### BACKGROUND

In the technical field of communications, a slicing packet network (SPN) fine granularity unit (FGU) inherits an efficient Ethernet core of an SPN, integrates fine-grained slicing into the overall architecture of the SPN, and provides a low-cost, refined, and hard-isolated fine granularity bearing pipeline.

In maintenance of a fine granularity service, maintenance personnel need to adjust a bandwidth of a fine granularity channel. Due to the fact that the fine granularity service often involves a plurality of nodes, it is difficult to strictly adjust the bandwidth simultaneously during bandwidth adjustment. Different bandwidth configurations of different nodes in the same fine granularity service may trigger related alarms, such as alarms of fine granularity operation, administration, maintenance (OAM) packet receiving and transmitting abnormalities, which are difficult to achieve lossless and imperceptible adjustments and often have a negative impact on the fine granularity service.

How to reduce the negative impact of bandwidth adjustment on the fine granularity service is the technical problem to be solved in the present application.

### SUMMARY

An objective of embodiments of the present application is to provide a method for adjusting a bandwidth of a fine granularity service, so as to reduce a negative impact of bandwidth adjustment on the fine granularity service.

In a first aspect, a method for adjusting a bandwidth of a fine granularity service is provided, performed by a processing node of a communication link for bearing the fine granularity service, and including: extending an OAM packet receiving period of a present node to a preset packet receiving period in response to a fine granularity service bandwidth adjustment instruction, the preset packet receiving period being not smaller than a target period, wherein the target period is a packet receiving period matching the fine granularity service bandwidth adjustment instruction; performing bandwidth adjustment on the fine granularity service according to the fine granularity service bandwidth adjustment instruction, and triggering an adjacent processing node to execute the fine granularity service bandwidth adjustment instruction; and adjusting, in a case where a bandwidth adjustment complete message is received, the OAM packet receiving period of the present node to the target period after a preset time.

In a second aspect, an electronic device is provided, the electronic device includes a processor, a memory, and a computer program stored on the memory and able to be run on the processor, and the computer program, when executed by the processor, implements the steps of the method as described in the first aspect.

In a third aspect, a computer-readable storage medium is provided, the computer-readable storage medium stores a computer program thereon, and the computer program, when executed by a processor, implements the steps of the method as described in the first aspect.

### BRIEF DESCRIPTION OF DRAWING(S)

The accompanying drawings illustrated herein are intended to provide a further understanding of the present application, and form a part of the present application, and schematic embodiments of the present application and their illustration are used to explain the present application, but do not constitute an inappropriate limitation to the present application.
FIG. 1 is a schematic flowchart of a method for adjusting a bandwidth of a fine granularity service according to embodiments of the present application.
FIG. 2 is another schematic flowchart of a method for adjusting a bandwidth of a fine granularity service according to embodiments of the present application.
FIG. 3 is another schematic flowchart of a method for adjusting a bandwidth of a fine granularity service according to embodiments of the present application.
FIG. 4 is another schematic flowchart of a method for adjusting a bandwidth of a fine granularity service according to embodiments of the present application.
FIG. 5 is another schematic flowchart of a method for adjusting a bandwidth of a fine granularity service according to embodiments of the present application.
FIG. 6 is another schematic flowchart of a method for adjusting a bandwidth of a fine granularity service according to embodiments of the present application.
FIG. 7 is another schematic flowchart of a method for adjusting a bandwidth of a fine granularity service according to embodiments of the present application.
FIG. 8 is another schematic flowchart of a method for adjusting a bandwidth of a fine granularity service according to embodiments of the present application.
FIG. 9 is another schematic flowchart of a method for adjusting a bandwidth of a fine granularity service according to embodiments of the present application.
FIG. 10 is a schematic structural diagram of an apparatus for adjusting a bandwidth of a fine granularity service according to embodiments of the present application.
FIG. 11 is a schematic structural diagram of an electronic device according to embodiments of the present application.

### DETAILED DESCRIPTION

The technical solutions in the embodiments of the present application will be clearly and completely described in the following with reference to the accompanying drawings in the embodiments of the present application. Apparently, the described embodiments are some rather than all of the embodiments of the present application. All other embodiments obtained by those ordinarily skilled in the art based on the embodiments in the present application without making creative efforts shall fall within the scope of protection of the present application. The drawing numbers in the present application are only used to distinguish various steps in the solution and are not used to limit an execution order of the various step. The specific execution order shall be subject to the description in the specification.

In the field of a fine granularity unit, network operation and maintenance need to be achieved through OAM. When bandwidth adjustment and maintenance are performed on a private line service configured with fine granularity OAM, it often leads to abnormality of OAM receiving and transmitting code blocks, which in turn triggers OAM to generate related alarms, thereby having an abnormal impact on a current private line service.

For the negative impact caused by such alarms, the alarms can be theoretically avoided in a short period of time by temporarily closing the alarms, and then restoring alarm detection after adjustment. However, in practical applications, due to differences between different devices, it is difficult for a control module to strictly issue a bandwidth adjustment instruction to each device at the same time. This results in differences in the timing of closing the alarms for different devices. Devices that close the alarms later may still cause alarms and have a negative impact on a fine granularity service.

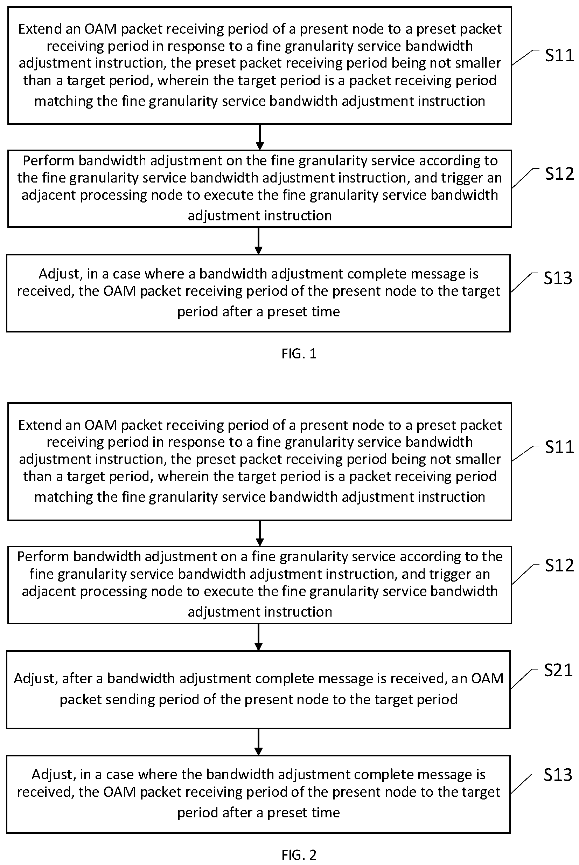

In order to solve the problems existing in the prior art, an embodiment of the present application provides a method for adjusting a bandwidth of a fine granularity service. This solution relates to the field of slicing packet network (SPN) fine granularity products, and as shown in FIG. 1, the method is applied to a processing node of a communication link for bearing the fine granularity service, and includes the following steps S11, S12 and S13.

At S11: an OAM packet receiving period of a present node is extended to a preset packet receiving period in response to a fine granularity service bandwidth adjustment instruction, the preset packet receiving period being not smaller than a target period, wherein the target period is a packet receiving period matching the fine granularity service bandwidth adjustment instruction.

In practical applications, there may be a plurality of processing nodes of the communication link for bearing the fine granularity service. The processing nodes of the communication link may include, for example, a source node and a sink node which are located at two ends of the communication link, as well as an intermediate node located between the two ends.

In some cases, the above fine granularity service bandwidth adjustment instruction may be an instruction issued by a control module in advance to various processing nodes in the communication link. Prior to receiving the fine granularity service bandwidth adjustment instruction, the processing node first extends the OAM packet receiving period of the present node to the preset packet receiving period, so that the adjusted OAM packet receiving period is longer than the packet receiving period of the fine granularity service, thereby avoiding triggering of alarms of OAM packet receiving abnormalities during the bandwidth adjustment process.

The target period is the packet receiving period matching the fine granularity service bandwidth adjustment instruction. For example, assuming that the fine granularity service may be configured with three bandwidths: B1=100 M, with an OAM packet receiving and transmitting period being T1; B2=40 M, with an OAM packet receiving and transmitting period being T2; and B3=10 M, with an OAM packet receiving and transmitting period being T3. According to a relationship among bandwidth sizes, it can be seen that a relationship among the OAM packet receiving and transmitting periods is T3>T2>T1.

If the fine granularity service bandwidth adjustment instruction instructs to adjust the bandwidth of the fine granularity service to B2, then the target period is T2, and the preset packet receiving period may be T3, for example. In this step, the OAM packet receiving period of the present node is extended to T3.

At S12: bandwidth adjustment is performed on the fine granularity service according to the fine granularity service bandwidth adjustment instruction, and an adjacent processing node is triggered to execute the fine granularity service bandwidth adjustment instruction.

In this step, the bandwidth adjustment of the fine granularity service of the present node is executed according to the fine granularity service bandwidth adjustment instruction, and the adjacent processing node in the communication link is triggered to execute the fine granularity service bandwidth adjustment instruction, thereby transmitting the trigger throughout the entire communication link to execute the bandwidth adjustment of the fine granularity service in sequence until the bandwidth adjustment of the fine granularity service is completed on the entire communication link.

At S13: in a case where a bandwidth adjustment complete message is received, the OAM packet receiving period of the present node is adjusted to the target period after a preset time.

After the bandwidth adjustment of the communication link is completed, the preset time is waited for each processing node to perform OAM configuration adjustment. Optionally, the length of the preset time is positively correlated with the number of the processing nodes in the communication link. That is, the more the processing nodes there are, the longer the preset time is to wait for all the processing nodes in the communication link to complete the OAM configuration adjustment.

After the preset time, as the bandwidth adjustment of the fine granularity service of each processing node has been completed and the OAM configuration has also been adjusted, the OAM packet receiving period of the present node is adjusted to the target period at this time, which can ensure that the adjusted OAM packet receiving period matches a service packet receiving period and avoid OAM packet receiving and transmitting alarms that may occur due to a mismatched period. Based on the example given above, in this step, the OAM packet receiving and transmitting period that is extended to T3 in advance is adjusted to the target period T2, so as to make the adjusted OAM packet receiving period match the adjusted bandwidth of the fine granularity service.

Through the solution provided in the embodiment of the present application, the OAM packet receiving period of the present node is extended first by the processing node of the communication link for bearing the fine granularity service, then the bandwidth adjustment is performed on the fine granularity service according to the fine granularity service bandwidth adjustment instruction, and after the bandwidth adjustment complete message is received, the OAM packet receiving period of the present node is adjusted to the target period after the preset time, so that the adjusted OAM packet receiving period adapts to the adjusted bandwidth of the fine granularity service. During the bandwidth adjustment process, there may be a case where the OAM packet receiving period mismatches the service packet receiving period. This solution extends the OAM packet receiving period in advance before adjusting the service bandwidth, which can eliminate the alarms that may be caused by the mismatch between the OAM packet receiving period and the service packet receiving period, thereby effectively reducing the negative impact of the bandwidth adjustment on the fine granularity service. After the bandwidth adjustment complete message is received, all nodes in the entire communication link are waited for completing the OAM period adjustment, so that after the service period matches the OAM period, the OAM packet receiving period of the present node is adjusted to the target period, avoiding possible alarms caused by the mismatch between the OAM period and the service period, achieving imperceptible adjustment of the bandwidth of the fine granularity service, and eliminating the negative effects during the bandwidth adjustment process.

Based on the solution provided in the above embodiment, optionally, in a case where the processing node for bearing the fine granularity service is an edge node of the communication link, the bandwidth adjustment complete message is sent by an intermediate node of the communication link, and the bandwidth adjustment complete message is used to instruct a peer edge node of the edge node to complete bandwidth adjustment.

In practical applications, the control module may specify to perform bandwidth adjustment starting from the edge node at one end of the communication link, and sequentially perform adjustment along the communication link until the peer edge node completes the bandwidth adjustment, so that all the processing nodes of the entire communication link complete the bandwidth adjustment.

In this instance, the edge node may specifically be a source node or a sink node. Taking the source node as an example, the bandwidth adjustment complete message is sent by an adjacent intermediate node of the source node. The message is used to indicate that the sink node has completed the bandwidth adjustment, that is, all the processing nodes in the entire communication link have completed the bandwidth adjustment of the fine granularity service.

For example, the bandwidth adjustment of the fine granularity service is performed starting from the source node. The source node first extends the OAM packet receiving period to T3, and then performs the bandwidth adjustment of the fine granularity service of the present node, including performing the service bandwidth adjustment of the fine granularity service in a transmitting direction and triggering the adjacent intermediate node to execute the fine granularity service bandwidth adjustment instruction. Subsequently, all the processing nodes in the communication link sequentially perform the bandwidth adjustment of the fine granularity service and trigger the adjacent processing node to continue adjusting until the sink node completes the bandwidth adjustment of the fine granularity service in the transmitting direction. The bandwidth adjustment of the fine granularity service in a receiving direction is executed by sequential transmission from the sink node to an opposite direction, until the source node receives a bandwidth adjustment complete message of the adjacent processing node. This message indicates that the sink node has completed the bandwidth adjustment of the fine granularity service, and also indicates that the entire communication link has completed the bandwidth adjustment of the fine granularity service in the transmitting direction and the receiving direction.

Through the solution provided in the embodiment of the present application, the edge node can know that the entire communication link has completed the bandwidth adjustment of the fine granularity service according to the bandwidth adjustment complete message sent by the adjacent intermediate node. Through the transmission of the message, it can be ensured that each processing node in the communication link has completed the service bandwidth adjustment, and the progress of the bandwidth adjustment of the fine granularity service can be accurately known, which is conducive to the subsequent adjustment of the OAM packet receiving period.

Based on the solution provided in the above embodiment, optionally, prior to the step of adjusting the OAM packet receiving period of the present node to the target period after the preset time, as shown in FIG. 2, the method further includes the step S21.

At S21, after the bandwidth adjustment complete message is received, an OAM packet transmitting period of the present node is adjusted to the target period.

In this instance, the method further includes adjusting the packet transmitting period of the present node. In some cases, after the bandwidth adjustment complete message is received, the OAM packet transmitting period of the present node may be immediately adjusted to the target period. Adjusting the OAM packet transmitting period in advance before adjusting the OAM packet receiving period will not trigger related alarms of inconsistency between the OAM packet receiving period and the service period. Therefore, adjusting the OAM packet transmitting period in advance to the target period before executing the OAM packet receiving period adjustment and after completing the bandwidth adjustment of the fine granularity service can facilitate the recovery and adjustment of the OAM packet receiving and transmitting periods, thereby achieving lossless and imperceptible adjustment and avoiding occurrence of the OAM alarms.

After completing the adjustment of the OAM packet transmitting period, the OAM packet receiving period of the present node is adjusted to the target period after the preset time, thereby achieving the consistency adjustment between the OAM packet receiving and transmitting periods and packet receiving and transmitting periods of the fine granularity service.

Based on the solution provided in the above embodiment, optionally, in a case where the processing node for bearing the fine granularity service is an intermediate node of the communication link, the bandwidth adjustment complete message is used to instruct both edge nodes at two ends of the communication link to complete bandwidth adjustment.

For the intermediate node of the communication link, the bandwidth adjustment may be performed in response to a trigger from the adjacent processing node. The bandwidth adjustment complete message received by the intermediate node includes a message characterizing that the source node completes the bandwidth adjustment and a message characterizing that the sink node completes the bandwidth adjustment. The bandwidth adjustment complete message represents that the two parts of communication links from the present node to the source node and from the present node to the sink node have completed the bandwidth adjustment of the fine granularity service. This indicates that the entire communication link has completed the bandwidth adjustment of the fine granularity service, and the progress of the bandwidth adjustment of the fine granularity service can be accurately known, which is conducive to the subsequent adjustment of the OAM packet receiving period.

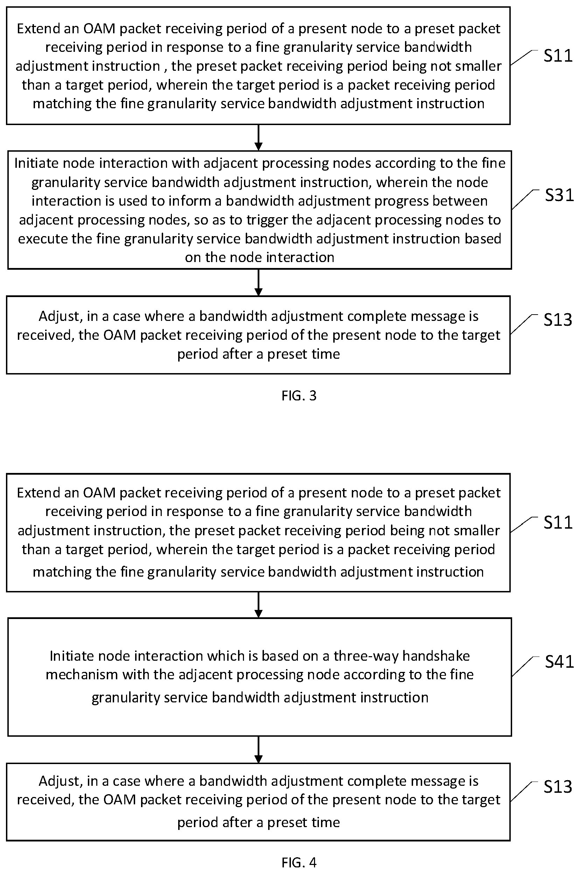

Based on the solution provided in the above embodiment, optionally, as shown in FIG. 3, step S12 above includes the following.

At S31: node interaction with an adjacent processing node is initiated according to the fine granularity service bandwidth adjustment instruction, wherein the node interaction is used to inform a bandwidth adjustment progress between the adjacent processing nodes of, so as to trigger the adjacent processing nodes to execute the fine granularity service bandwidth adjustment instruction based on the node interaction.

In the bandwidth adjustment process, the node interaction with the adjacent processing node may be initiated to inform the adjacent processing node of the bandwidth adjustment progress, so as to sequentially instruct each processing node along the communication link to perform the bandwidth adjustment of the fine granularity service.

Through the solution provided in the embodiment of the present application, the bandwidth adjustment instruction issued by the control module may instruct each processing node in the communication link for the fine granularity service to be adjusted to perform the bandwidth adjustment one by one in order. During the adjustment process, the adjacent nodes are informed of the bandwidth adjustment progress through the node interaction, effectively reducing the negative impact of the bandwidth adjustment on the fine granularity service. The robustness of fine granularity service maintenance can be effectively improved, and the use experience of the fine granularity service by a user is optimized.

Based on the solution provided in the above embodiment, optionally, as shown in FIG. 4, the step S31 above includes the following.

At S41: node interaction, which is based on a three-way handshake mechanism, with the adjacent processing node is initiated according to the fine granularity service bandwidth adjustment instruction.

Based on the solution provided in the above embodiment, optionally, the bandwidth adjustment instruction carries ingress fine granularity time slot information and egress fine granularity time slot information, wherein the ingress fine granularity time slot information is used to adjust the bandwidth of the fine granularity service in a receiving direction, and the egress fine granularity time slot information is used to adjust the bandwidth of the fine granularity service in a transmitting direction.

The bandwidth adjustment instruction issued by the control module in this solution may carry fine granularity time slot information and an identifier of a fine granularity service. The fine granularity time slot information may specifically include sub time slot ID information, which is used to identify specific time slot bitmap information to be newly added or deleted. The above ID of the fine granularity service is used to identify which end-to-end fine granularity service needs to be adjusted.

In addition, in this solution, the control module may determine from which end to start the bandwidth adjustment according to actual needs. The issued bandwidth adjustment instruction may carry specified information of a first end to clarify from which processing node to start the bandwidth adjustment, so that each processing node knows the direction of the bandwidth adjustment.

Optionally, when the bandwidth needs to be increased, the bandwidth adjustment instruction issued by the control module carries fine granularity time slot increase information, which is used to characterize performing of the bandwidth adjustment from the sink end to the source end. Correspondingly, when the bandwidth needs to be decreased, the bandwidth adjustment instruction carries fine granularity time slot decrease information, which is used to characterize performing of the bandwidth adjustment from the source end to the sink end.

Through the solution provided in the embodiment of the present application, it can be ensured that the bandwidth of the processing node near the source end is greater than that of the processing node near the sink end during the adjustment process. In other words, it is ensured that the bandwidth in the communication link is "small upstream, large downstream", so as to avoid bandwidth abnormality alarms that may occur when an upstream bandwidth is large and a downstream bandwidth is small.

For example, assuming that the fine granularity service bandwidth adjustment instruction carries the fine granularity time slot decrease information to reduce the bandwidth in the communication link, each processing node in the communication link performs adjustment one by one in the direction from the source end to the sink end. When receiving three-way handshake initiated by the adjacent processing node, each intermediate node performs corresponding node interaction that includes the three-way handshake, so as to know the bandwidth adjustment progress of the adjacent node.

In the embodiments of the present application, node interaction between the adjacent nodes is achieved by means of the three-way handshake. In some cases, information transmission may be achieved through S/CR/CA/bits in the overhead of a fine granularity basic unit, achieving transmission of time slot addition and deletion information and hop-by-hop adjustment, thereby achieving end-to-end lossless bandwidth adjustment of the communication link. This solution can avoid packet receiving and transmitting abnormalities of fine granularity OAM possibly caused during the maintenance process of the fine granularity service, and avoid abnormal packet loss of the fine granularity service. Due to the fact that this solution can not only ensure lossless adjustment of the fine granularity bandwidth, but also avoid alarms of OAM packet receiving and transmitting abnormalities, the robustness of the fine granularity service maintenance may be improved, the adaptability of refined management of fine granularity under changes in the service bandwidth is enhanced, and the user experience of the service is improved.

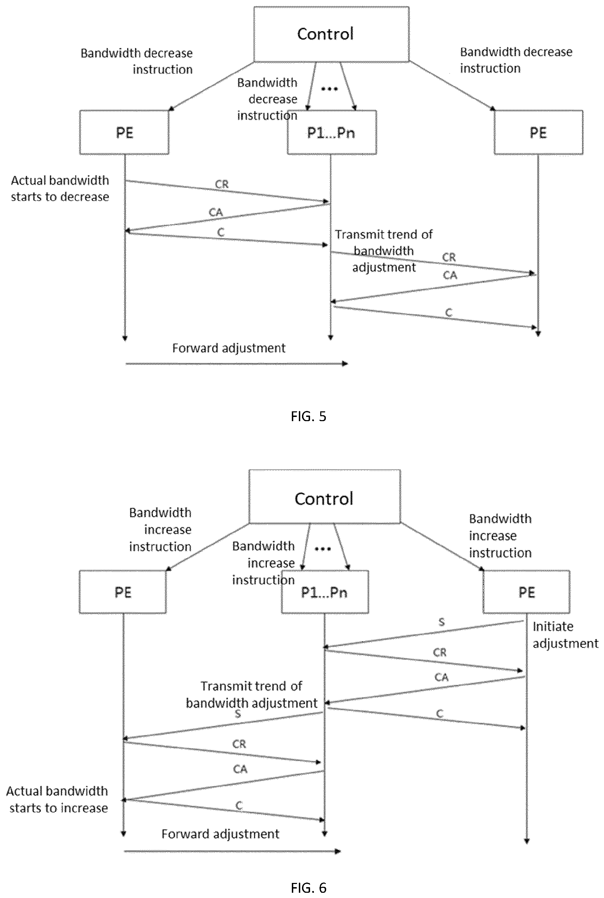

The overhead described in this instance may specifically refer to overhead of the fine granularity unit (FGU). The process of bandwidth adjustment of the fine granularity service is exemplified below with reference to FIG. 5.

For example, when the bandwidth of a time slot is decreased, starting from a first link segment from a source PE node to a first P node, bandwidth decrease adjustment is performed segment by segment sequentially towards the downstream. The left side of FIG. 5 shows the source end, and according to the direction of an arrow indicated by the "forward adjustment" in the figure, the adjustment is performed node by node from the source end to the sink end.

First, the control module issues a bandwidth adjustment instruction to all network elements involved in the adjustment (including the PE nodes and the P nodes). The bandwidth adjustment instruction includes an ID of a fine granularity to be adjusted, as well as an ingress fine granularity time slot to be deleted, and an egress fine granularity time slot to be deleted.

Subsequently, starting from the source PE node, CR information (a value of a CR bit is set to be 1) as well as the fine granularity ID and sub time slot ID information involved in the adjustment are sent to the next node in the sink direction by means of overhead. After receiving the CR information with a value of 1 from the overhead, the next node sends back CA information (a value of a CA bit is set to be 1) as well as the fine granularity ID and sub time slot ID information involved in the adjustment to the source direction by means of the overhead. After receiving the CA information that is sent back, the previous node determines that the time slot adjustment becomes effective. At this time, C bits of the first three basic units of a certain multiframe are set to be 1 and sent, while carrying the fine granularity ID and sub time slot ID information involved in the adjustment.

After adjusting the bandwidth at the source PE node, all nodes in the communication link are adjusted in order. After each node in the communication link receives any one of C-bit information with a value of 1 from the first three basic units of the multiframe, it needs to receive and recover data from the adjusted service time slot in the next multiframe, and trigger transmission of the CR information as well as the fine granularity ID and sub time slot ID information involved in the adjustment to the next node in the sink direction by means of overhead.

The bandwidths of the nodes are adjusted one by one along the communication link until the sink PE node receives the C-bit information with the value of 1, and it is determined that the time slot adjustment becomes in the next multiframe thereof. At this point, the adjustment of end-to-end time slot bandwidth decrease is completed.

As shown in FIG. 6, when the bandwidth of the time slot is increased, starting from sink PE node, bandwidth increase adjustment is performed sequentially segment by segment towards the. In FIG. 6, the right side is the sink end and the left side is the source end. The bandwidth adjustment node by node from the sink end to the source end is achieved in an order from right to left in the figure.

First, the control module issues a bandwidth adjustment instruction to all network elements involved in the adjustment (including the PE nodes and the P nodes). The bandwidth adjustment instruction includes an ID of a fine granularity to be adjusted, as well as an ingress fine granularity time slot to be increased, and an egress fine granularity time slot to be increased. Bitmaps of the time slot to be adjusted are the same, but an arrival time to each network element may be inconsistent. The bandwidth adjustment only needs to be performed node by node in sequence according to the solution provided in the embodiment of the present application. This inconsistency in arrival time will not have a negative impact on the bandwidth adjustment, thus avoiding alarms or service abnormalities caused by an inconsistent bandwidth.

Subsequently, starting from the sink PE node, S information (a value of an S bit is set to be 1) and the fine granularity ID involved in the adjustment are sent to the previous node in the source direction by means of overhead. After receiving the S information with a value of 1 from the overhead, the previous node initiates a time slot adjustment operation and sends CR information (a value of a CR bit is set to be 1) as well as the fine granularity ID and sub time slot ID information involved in the adjustment to the next node in the sink direction by means of the overhead. After receiving the CR information with a value of 1 from the overhead, the next node sends back CA information (a value of a CA bit is set to be 1) as well as the fine granularity ID and sub time slot ID information involved in the adjustment to the source direction through the overhead.

After receiving the CA information that is sent back, the previous node determines that the time slot adjustment becomes effective. At this time, C bits of the first three basic units of a certain multiframe are set to be 1 and sent to the downstream direction, while carrying the fine granularity ID and sub time slot ID information involved in the adjustment. Moreover, transmission of the S information as well as the fine granularity ID and sub time slot ID information involved in the adjustment to the previous node in the source direction through the overhead is triggered.

The bandwidth of each node is adjusted one by one along a central link. After each node receives any one of C-bit information with a value of 1 from the first three basic units of the multiframe, it needs to receive and recover data from the adjusted service time slot in the next multiframe. It is determined that the slot adjustment becomes effective when the source PE node receives the S information (the value of the S bit is set to 1) as well as the fine granularity ID and sub time slot ID information involved in the adjustment, and completes interaction of CR/CA/C information with the next hop node (the first P node) of a source PE. At this point, the adjustment of end-to-end time slot bandwidth increase is completed.

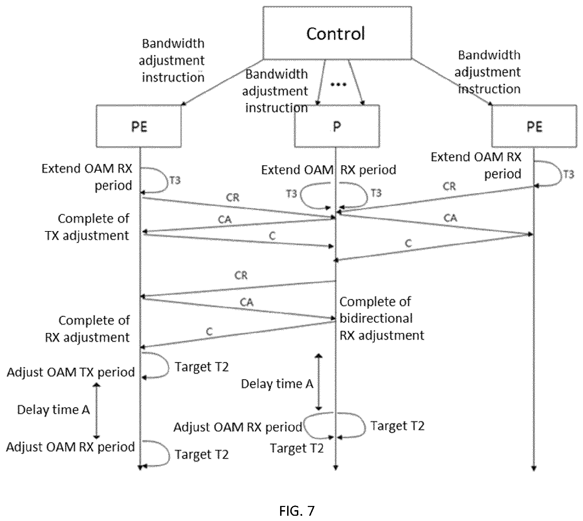

As shown in FIG. 7, the receiving direction is represented by RX and the transmitting direction is represented by TX in the figure. In the embodiment of the present application, in a scenario of fine granularity OAM configuration, the bandwidth adjustment instruction is first issued from the control module to the end, and adjustment is independently performed in forward and reverse directions without affecting each other, thus achieving bidirectional lossless bandwidth adjustment of the fine granularity service.

For the source PE node, after receiving the bandwidth adjustment instruction, an adjustment state machine is turned on to extend the OAM packet receiving period of the present node to the maximum T3, and then CR/CA/C state machine transition starts to be executed. After adjustment in the direction TX is completed, the OAM packet transmitting period will not be adjusted immediately. The OAM period adjustment in the direction TX is only performed after the adjustment initiated from the sink PE by the present node as a receiver is transmitted to the local end, and the adjustment in the receiving direction of the local end succeeds. A target value is a service bandwidth adjustment target value T2. Subsequently, the OAM period adjustment in the direction RX may be performed after delaying for a certain time A, with the target value being consistent with that in the direction TX. The delay time A is used to wait for completion of the bandwidth adjustment in the direction RX. This delay time may be positively correlated with the number of nodes to be adjusted in the communication link, or may be pre-set based on experience.

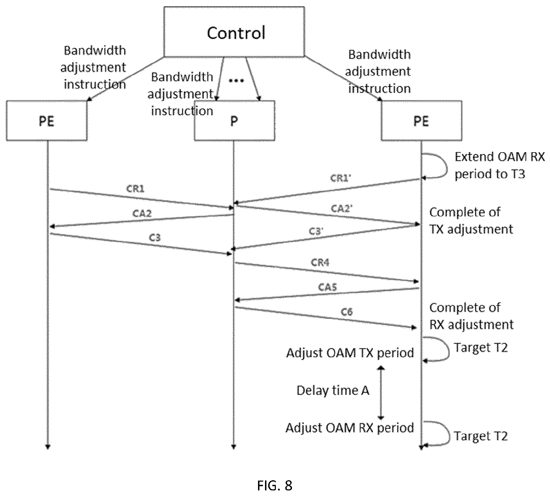

Similarly, referring to FIG. 8, for the sink PE node, after receiving the bandwidth adjustment instruction, the RX period of the OAM of the fine granularity to be adjusted is first extended to T3, and then the bandwidth adjustment of the service starts to be performed. After the TX adjustment initiated by its own end, the TX period of the OAM will also not be adjusted immediately. The TX period of its own end is only started to be adjusted to the target value T2 after the service bandwidth adjustment C initiated by the source PE is reached. After delaying for a certain time A, the RX period of the OAM of our own side is recovered to the target value T2.

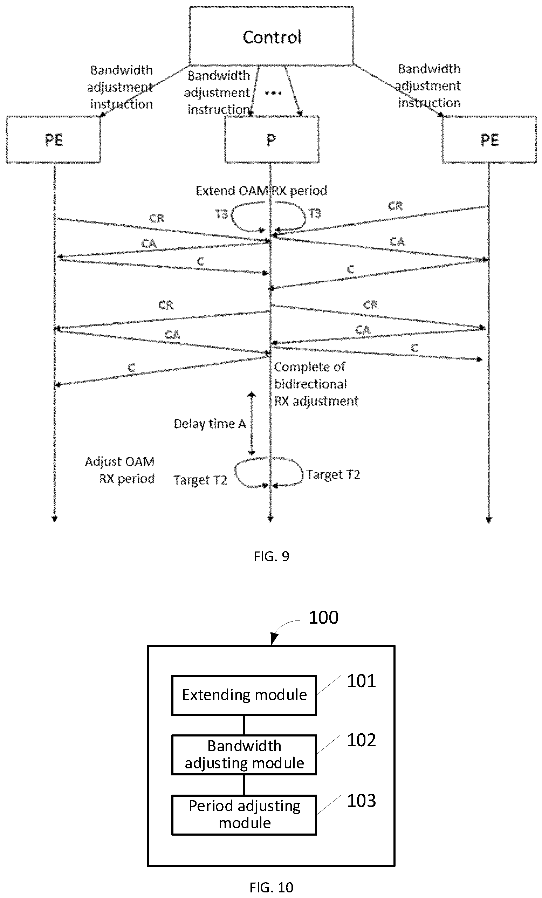

For the intermediate node (the P node) in the communication link, referring to FIG. 9, after the bandwidth adjustment instruction is initiated by the control module, it enters an adjustment state machine Init mode. When receiving a switching request CR=1 from the source PE direction or sink PE direction, the OAM period of the corresponding fine granularity in the direction RX is extended to the maximum T3. After the bidirectional RX of the cross fine granularity is adjusted successfully, the state machine transitions to a Done mode. After delaying for a certain time A, the state transitions to the Init mode. Meanwhile, the RX period is adjusted, with a target value of T2. In addition, the value of the delay time A may be configured, and its size depends on the number of end-to-end adjustment nodes. At this point, the adaptive period adjustment of fine granularity OAM in the time slot lossless adjustment process is completed.

The solution provided in the embodiment of the present application may be flexibly applied to various scenarios, such as dedicated networks that support fine granularity functionality and provide guaranteed latency and isolation, such as an SPN, for example, in a 5G access/aggregation network interconnection scenario.

When the OAM packet receiving and transmitting period is configured in a scenario of fine granularity OAM, assuming that three bandwidths configured for the fine granularity service are defined as: B1=100 M, with an OAM packet receiving and transmitting period being T1; B2=40 M, with an OAM packet receiving and transmitting period being T2; and the minimum granularity of the current fine granularity B3=10 M, with an OAM packet receiving and transmitting period being T3. According to the relationship among the bandwidth sizes, it can be seen that the relationship of the OAM packet receiving and transmitting periods is T3>T2>T1.

Assuming that the bandwidth needs to be adjusted from B1 to B2, for a source PE device, the packet receiving period of the source PE device is modified to T3 first to prevent a bit error caused by an inconsistent bandwidth during the adjustment process, which can in turn lead to OAM related alarms and affect the service during the bandwidth adjustment process. After extension of the packet receiving period, the bandwidth adjustment is performed by executing three-way handshake and other steps according to the solution provided in the above examples. After CR/CA/C interaction, the bandwidth adjustment of the source end in the direction TX is completed. After the bandwidth adjustment initiated by the sink PE is transmitted to the source PE device and the interaction in the direction RX is completed, adjustment of the source end in both the directions TX and RX succeeds. At this time, the packet transmitting period of the source PE device is modified to T2. The recovery time node for the period in the direction RX needs to be modified to the target period T2 after the entire end-to-end adjustment is completed.

After receiving the bandwidth adjustment overhead CR=1 from the upstream, a P-node device first modifies the packet receiving period of sub granularity interconnected to the upstream to T3, and then starts responding to the CA=1 overhead. Subsequently, after CR/CA/C interaction with upstream devices, adjustment of the sub granularity in the receiving direction RX is completed. After the adjustment of a cross sub granularity corresponding to the sub granularity in the direction RX is also completed, and a certain time A is delayed, the OAM packet receiving periods of the two cross sub granularities in the direction RX are recovered separately.

Compared with general maintenance for high-value private line fine granularity services, the solution provided in the embodiments of the present application enables maintenance personnel to perform network maintenance at any time without worrying about service damage affecting private line users, improving the user experience of the private line services. At the same time, refined management of fine granularity OAM enhances the control ability of the maintenance personnel over real-time network services, greatly reducing the maintenance costs of operators.

In order to solve the problems existing in the prior art, an embodiment of the present application further provides an apparatus 100 for adjusting a bandwidth of a fine granularity service, applied to a processing node of a communication link for bearing the fine granularity service, as shown in FIG. 10, including an extending module 101, a bandwidth adjusting module 102 and a period adjusting module 103.

The extending module 101 is configured to extend an OAM packet receiving period of a present node to a preset packet receiving period in response to a fine granularity service bandwidth adjustment instruction, the preset packet receiving period being not smaller than a target period, wherein the target period is a packet receiving period matching the fine granularity service bandwidth adjustment instruction;

The bandwidth adjusting module 102 is configured to perform bandwidth adjustment on the fine granularity service according to the fine granularity service bandwidth adjustment instruction, and trigger an adjacent processing node to execute the fine granularity service bandwidth adjustment instruction; and

The period adjusting module 103 is configured to adjust, in a case where a bandwidth adjustment complete message is received, the OAM packet receiving period of the present node to the target period after a preset time.

Through the apparatus provided in the embodiment of the present application, the OAM packet receiving period of the present node is extended first by the processing node of the communication link for bearing the fine granularity service, then the bandwidth adjustment is performed on the fine granularity service according to the fine granularity service bandwidth adjustment instruction, and after the bandwidth adjustment complete message is received, the OAM packet receiving period of the present node is adjusted to the target period after the preset time, so that the adjusted OAM packet receiving period adapts to the adjusted bandwidth of the fine granularity service. During the bandwidth adjustment process, there may be a case where the OAM packet receiving period mismatches the service packet receiving period. This solution extends the OAM packet receiving period in advance before adjusting the service bandwidth, which can eliminate the alarms that may be caused by the mismatch between the OAM packet receiving period and the service packet receiving period, thereby effectively reducing the negative impact of the bandwidth adjustment on the fine granularity service. After the bandwidth adjustment complete message is received, all nodes in the entire communication link are waited for completing the OAM period adjustment, so that after the service period matches the OAM period, the OAM packet receiving period of the present node is adjusted to the target period, avoiding possible alarms caused by the mismatch between the OAM period and the service period, achieving imperceptible adjustment of the bandwidth of the fine granularity service, and eliminating the negative effects during the bandwidth adjustment process.

The above modules in the apparatus provided in the embodiment of the present application can also implement the steps of the method provided in the above method embodiments. Alternatively, the apparatus provided in the embodiment of the present application may also include other modules in addition to the above modules to implement the steps of the method provided in the above method embodiments. Moreover, the apparatus provided in the embodiments of the present application can achieve the technical effects that can be achieved by the above method embodiments.

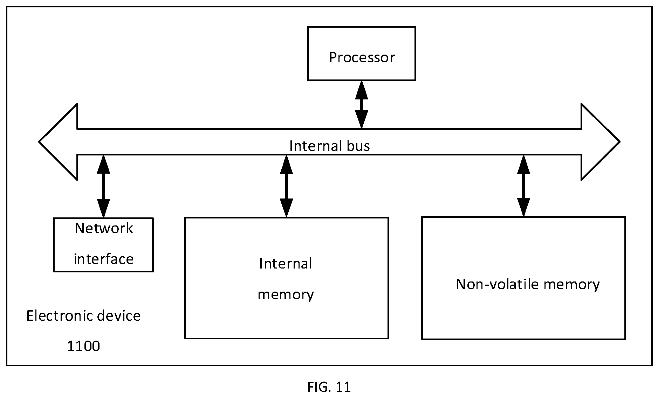

FIG. 11 is a schematic structural diagram of an electronic device 1100 in an embodiment of the specification. Referring to FIG. 11, at a hardware level, the electronic device 1100 includes a processor, optionally further includes an internal bus, a network interface, and a memory. The memory may include an internal memory such as a high-speed random-access memory (RAM), or a non-volatile memory such as at least one disk memory. Certainly, the electronic device 1100 may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, only one bidirectional arrow is shown in FIG. 11, but it does not indicate only one bus or one type of bus.

The memory is configured to store a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form the above implement the steps of the method for adjusting a bandwidth of a fine granularity service. Correspondingly, the processor executes the program stored in the memory and is specifically configured to perform the following operations.

A to-be-corrected text is input into an error recognition model, so that the error recognition model performs feature encoding of semantic and pronunciation length on characters of the to-be-corrected text, so as to obtain a first feature sequence of the to-be-corrected text, and an error type of the characters in the to-be-corrected text is predicted based on the first feature sequence of the to-be-corrected text, so as to obtain the error type of the characters in the to-be-corrected text; wherein, the to-be-corrected text is generated based on speech-to-text, and the error type include a first error type where a single-character pronunciation is incorrectly converted and output as double characters, and a second error type where a double-character pronunciation is incorrectly converted and output as a single character.

Based on the error type of the characters in the to-be-corrected text, the number of characters in the to-be-corrected text is corrected, wherein after the number of characters of the to-be-corrected text is corrected, the double characters originally belonging to the first error type and converted from the same single character pronunciation are replaced with one semantic-free character, and the single character originally belonging to the second error type and converted from the double character pronunciation are replaced with two semantic-free characters.

A phoneme sequence of the to-be-corrected text after the number of characters is corrected is generated based on the error type of the characters in the to-be-corrected text and a phoneme sequence of the to-be-corrected text before the number of characters is corrected.

The to-be-corrected text after the number of characters is corrected and the phoneme sequence of the to-be-corrected text after the number of characters is corrected are input to a text error correction model, so that the text error correction model performs feature encoding on the characters of the to-be-corrected text after the number of characters is corrected and phonemes corresponding to the characters, so as to obtain a second feature sequence of the to-be-corrected text after the number of characters is corrected, and predicts a correct character sequence of the to-be-corrected text after the number of characters is corrected based on the second feature sequence of the to-be-corrected text after the number of characters is corrected, so as to obtain a corrected text corresponding to the to-be-corrected text.

The method disclosed in any of the embodiments of the specification may be applied to the processor or implemented by the processor. The processor may be an integrated circuit chip having signal processing capabilities. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the embodiments of the present disclosure may be implemented or performed. The general-purpose processor may be a microprocessor or this processor may also be any conventional processor, etc. The steps of the method disclosed in conjunction with the embodiments of the present disclosure may be directly embodied to be executed and completed by a hardware decoding processor, or may be executed and completed through a combination of hardware and software modules in the decoding processor. A software module may be located in a random access memory, a flash memory, a read only memory, a programmable read only memory, or an electrically erasable programmable memory, a register and other mature storage mediums in the art. The storage medium is located in the memory. The processor reads information in the memory and completes the steps of the above method in combination with hardware thereof.

An embodiment of the present application further provides a computer-readable storage medium, a computer program is stored on the computer-readable storage medium, and the computer program, when executed by a processor, implements various processes of the above embodiment of the method for adjusting the bandwidth of the fine granularity service and can achieve the same technical effects, which is not repeated here to avoid repetition. The computer-readable storage medium is, for example, a read-only memory (ROM), a random access memory (RAM), a magnetic disk, or an optical disc.

Those skilled in the art should understand that the embodiments of the present application may be provided as methods, systems or computer program products. Therefore, the present application may take the form of a full hardware embodiment, a full software embodiment, or an embodiment combining software and hardware. Besides, the present application may adopt the form of a computer program product implemented on one or more computer available storage media (including but not limited to a disk memory, a CD-ROM, an optical memory and the like) containing computer available program codes.

The present application is described with reference to the flow diagram and/or block diagram of the method, device (system), and computer program product according to the embodiments of the present application. It should be understood that each flow and/or block in the flow diagram and/or block diagram and the combination of flows and/or blocks in the flow diagram and/or block diagram can be implemented by computer program instructions. These computer program instructions can be provided to processors of a general-purpose computer, a special-purpose computer, an embedded processor or other programmable data processing apparatuses to generate a machine, so that instructions executed by processors of a computer or other programmable data processing apparatuses generate a device for implementing the functions specified in one or more flows of the flow diagram and/or one or more blocks of the block diagram.

These computer program instructions may also be stored in a computer-readable memory which can guide the computer or other programmable data processing devices to work in a specific mode, thus the instructions stored in the computer-readable memory generates an article of manufacture that includes a commander apparatus that implement the functions specified in one or more flows in the flow diagrams and/or one or more blocks in the block diagrams.

These computer program instructions may also be loaded to the computer or other programmable data processing devices, so that a series of operating steps are executed on the computer or other programmable devices to generate computer-implemented processing, such that the instructions executed on the computer or other programmable devices provide steps for implementing the functions specified in one or more flows in the flow diagrams and/or one or more blocks in the block diagrams.

In a typical configuration, a computing device includes one or more processors (CPUs), input/output interfaces, network interfaces, and memory.

The memory may include a volatile memory, a random access memory (RAM), and/or a non-volatile memory in the computer-readable medium, such as a read-only memory (ROM) or a flash RAM. The memory is an example of the computer-readable medium.

The computer-readable medium, including permanent and non-permanent, removable and non-removable media, can be used by any method or technology to achieve information storage. Information can be computer-readable instructions, data structures, modules of programs, or other data. Examples of the computer storage medium include, but not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage and magnetic cassette tape, magnetic-tape magnetic-disk storage or other magnetic storage devices or any other non-transmission media, and may be used to store information that can be accessed by a computing device. According to the definition herein, the computer-readable medium does not include a transitory computer-readable media such as modulated data signals and carriers.

It should be further noted that terms "including," "containing," or any other variations are intended to cover non-exclusive inclusion, such that a process, method, commodity or device that includes a series of elements not only includes those elements, but also other elements that are not explicitly listed, or further include elements inherent in such the process, method, commodity or device. Without further limitations, the elements limited by a statement "including one..." do not exclude the existence of other identical elements in the process, method, commodity or device that includes the said elements.

Those skilled in the art should understand that the embodiments of the present application may be provided as methods, systems or computer program products. Therefore, the present application can adopt forms of full hardware embodiments, full software embodiments, or embodiments combining software and hardware aspects. Moreover, the present application may adopt a form of the computer program products implemented on one or more computer available storage mediums (including but not limited to a disk memory, a CD-ROM, an optical memory and the like) containing computer available program codes.

The above is only the embodiments of the present application, and is not intended to limit the present application. For those skilled in the art, the present application can have various changes and variations. Any modification, equivalent replacement, improvement and the like made within the spirit and principle of the present application shall all be contained in the scope of claims of the present application.

## Claims

1. A method for adjusting a bandwidth of a fine granularity service, performed by a processing node of a communication link for bearing the fine granularity service, comprising:
extending, in response to a fine granularity service bandwidth adjustment instruction, an operation, administration and maintenance called OAM packet receiving period of a present node to a preset packet receiving period, the preset packet receiving period being not smaller than a target period, wherein the target period is a packet receiving period matching the fine granularity service bandwidth adjustment instruction;
performing bandwidth adjustment on the fine granularity service according to the fine granularity service bandwidth adjustment instruction, and triggering an adjacent processing node to execute the fine granularity service bandwidth adjustment instruction; and
adjusting, in a case where a bandwidth adjustment complete message is received, the OAM packet receiving period of the present node to the target period after a preset time.

2. The method according to claim 1, wherein in a case where the processing node for bearing the fine granularity service is an edge node of the communication link, the bandwidth adjustment complete message is sent by an intermediate node of the communication link, and the bandwidth adjustment complete message is used to instruct a peer edge node of the edge node to complete bandwidth adjustment.

3. The method according to claim 2, prior to adjusting the OAM packet receiving period of the present node to the target period after the preset time, further comprising:
adjusting, after the bandwidth adjustment complete message is received, an OAM packet transmitting period of the present node to the target period.

4. The method according to claim 1, wherein in a case where the processing node for bearing the fine granularity service is an intermediate node of the communication link, the bandwidth adjustment complete message is used to instruct both edge nodes at two ends of the communication link to complete bandwidth adjustment.

5. The method according to claim 1, wherein performing the bandwidth adjustment on the fine granularity service according to the fine granularity service bandwidth adjustment instruction, and triggering the adjacent processing node to execute the fine granularity service bandwidth adjustment instruction comprises:
initiating node interaction with the adjacent processing node according to the fine granularity service bandwidth adjustment instruction, wherein the node interaction is used to inform a bandwidth adjustment progress between adjacent processing nodes, so as to trigger the adjacent processing nodes to execute the fine granularity service bandwidth adjustment instruction based on the node interaction.

6. The method according to claim 5, wherein initiating the node interaction with the adjacent processing node according to the fine granularity service bandwidth adjustment instruction comprises:
initiating node interaction which is based on a three-way handshake mechanism with the adjacent processing node according to the fine granularity service bandwidth adjustment instruction.

7. The method according to claim 1, wherein the bandwidth adjustment instruction carries ingress fine granularity time slot information and egress fine granularity time slot information, the ingress fine granularity time slot information is used to adjust the bandwidth of the fine granularity service in a receiving direction, and the egress fine granularity time slot information is used to adjust the bandwidth of the fine granularity service in a transmitting direction.

8. The method according to any one of claims 1 to 7, wherein a length of the preset time is positively correlated with a number of processing nodes in the communication link.

9. An electronic device, comprising a memory, a processor, and a computer program stored on the memory and able to run on the processor, wherein the computer program, when executed by the processor, implements steps of the method for adjusting a bandwidth of a fine granularity service according to any one of claims 1 to 8.

10. A computer-readable storage medium, having a computer program stored thereon, wherein the computer program, when executed by a processor, implements steps of the method for adjusting a bandwidth of a fine granularity service according to any one of claims 1 to 8.
